# EUROPEAN PATENT SPECIFICATION

(11) **EP 4 148 980 B1**
(45) Date of publication and mention of the grant of the patent: **12.02.2025**
(21) Application number: 22195172.6
(22) Date of filing: 12.09.2022
(51) Int. Cl.: H02S 20/23, F24S 25/60, F24S 25/613, F24S 25/70

(54) **TILE HOOK**
DACHHAKEN
CROCHET DE TOITURE

(30) Priority: 13.09.2021 NL 2029180
(43) Date of publication of application: 15.03.2023
(73) Proprietor: BluBase B.V., 8028 PT Zwolle (NL)
(72) Inventor: Jurg, Ruben, 3853 MJ Ermelo (NL)
(74) Representative: Patentwerk B.V.

(56) References cited:
- EP-A1- 3 493 397
- EP-A2- 2 423 621
- CN-U- 202 834 646
- CN-U- 203 562 992
- DE-U1- 202009 003 745
- NL-C2- 2 011 649

## Description

The invention relates to a tile hook for mounting a frame for for instance solar panels on a tile roof, which tile hook comprises:
- a Z-shaped body having an elongate base part, a first end part extending from a first end of the elongate base part substantially perpendicularly of the longitudinal axis of the base part, and a second end part extending from a second end of the elongate base part substantially perpendicularly of the longitudinal axis of the base part and in opposite direction to the direction of the first end part;
- a first mounting part for mounting on a frame for for instance solar panels, which first mounting part is slidable perpendicularly of the longitudinal axis of the base part and is arranged on the first end part;
   wherein the first mounting part comprises a first toothing and wherein the first end part comprises a second toothing;
   wherein the first mounting part is displaceable in a direction parallel to the longitudinal axis of the base part between a first position in which the first toothing and the second toothing engage in each other and a second position in which the first toothing and the second toothing are out of engagement with each other.
- locking means for holding the first mounting part in the first position.

Tile hooks are used to enable mounting of a frame on a tile roof. Solar panels are then arranged on this frame. A hook-shaped mounting element for mounting solar panels to a roof is disclosed in EP 3 493 397 Al. 1

The known tile hooks are either slid with an end round a tile lath or screwed onto the roof boarding. The elongate base part of the tile hook then runs between the roof tiles outward, where the frame can be mounted on the other end.

Because there are diverse types of roof tile with different shapes and heights, it is known for the mounting part for the frame to be arranged slidably on the base body of the tile hook, so that the desired distance from the mounting part to the tile roof can be set for each tile hook.

This adjustability is further necessary because a tile roof is often not completely level, but on the contrary sags slightly. Because a frame for solar panels must however be level, this difference between a sagging roof surface and the flat frame can be accommodated by adjusting the tile hooks.

The known tile hooks provide for the adjustability by means of screws or bolts, whereby the mounting part can be released, can subsequently be slid into the correct position and can then be fixed again. This unscrewing, adjusting and screwing in place again takes time and requires tools. Because such work is carried out on a sloping roof surface, it entails greater risks for the installers the more operations need be performed and the more they have to move back and forth across the roof in order to mount the frame in the correct position.

It is therefore an object of the invention to reduce or even obviate the above stated drawbacks.

This object is achieved according to the invention with a tile hook according to the preamble, which is characterized in that the locking means comprise a partially wedge-shaped body which is slidable perpendicularly of the longitudinal axis of the base part between a release position and a locking position, wherein in the locking position the partially wedge-shaped body holds the mounting part in the first position and in the release position the first mounting part is freely displaceable between the first and second position.

With the tile hook according to the invention it is possible to have the mounting part be freely slidable by putting the partially wedge-shaped body in the release position. This makes it possible to mount a frame part on several tile hooks and set it to a desired height. Each mounting part of each tile hook can then be fixed in the correct position by putting the partially wedge-shaped body in the locking position, whereby the first toothing and second toothing of the mounting part and the first end part engage in each other.

In a first embodiment of the tile hook according to the invention one of the first end and the mounting part partially encloses the other, and the partially wedge-shaped body is positioned between the enclosing part and the enclosed part in the locking position.

Because the partially wedge-shaped body is positioned between the enclosing part and the enclosed part and is slidable there between the release position and the locking position, the wedge of the partially wedge-shaped body can press the two parts against each other in simple manner so that the first toothing and second toothing engage in each other and the mounting part is locked in a position.

In another embodiment of the tile hook according to the invention the enclosing part is composed of at least two shell parts which are arranged on each other and which form a tubular part into which the enclosed part protrudes.

By creating a tubular form a strong construction is formed in simple manner, whereby the enclosed part can be guided and can moreover be fixed by the partially wedge-shaped body in simple manner.

In a preferred embodiment of the tile hook according to the invention the enclosing part is the first end and one of the at least two shell parts is a plastic shell part which extends up to the second end along the Z-shaped body.

The advantage of the plastic shell part is that it can be easily formed by means of for instance injection moulding. A guide for the partially wedge-shaped part can hereby be provided in simple manner, as can the wedge-shaped part itself, or surfaces co-acting therewith. The plastic along the elongate base part moreover provides for a slightly resilient layer, whereby the load on the tiles is distributed more uniformly and the chances of a tile breaking due to a point load are precluded.

A highly preferred embodiment of the tile hook according to the invention further comprises resilient means for urging the partially wedge-shaped body to the release position;
a resilient first locking protrusion which is displaceable transversely of the sliding direction of the partially wedge-shaped body; and
a second locking protrusion arranged on the partially wedge-shaped body, which first locking protrusion and second locking protrusion can engage in each other in order to lock the partially wedge-shaped body in the locking position.

With the resilient means it is ensured that the partially wedge-shaped part is held in the release position during placing of the tile hook and arranging of the frame on the tile hook. The tile hook can hereby be easily adjusted.

As soon as the tile hook is in the correct position, the position of the mounting part can be fixed by sliding of the partially wedge-shaped body. The two locking protrusions ensure that the partially wedge-shaped body is held in the locking position. If the tile hook were to be readjusted, the partially wedge-shaped body can be unlocked by operating the resilient first locking protrusion and be returned to the release position by the resilient means.

Another embodiment of the tile hook according to the invention further comprises a second mounting part for mounting on a roof, which second mounting part is L-shaped and is slidable perpendicularly of the longitudinal axis of the base part and arranged on the second end part with one leg of the L-shape, and wherein the other leg of the L-shape extends parallel to the longitudinal axis of the base part.

Such an L-shaped second mounting part can be hooked behind a tile lath of a tile roof in simple manner. Owing to the slidability, the width of the second end part and the second mounting part can be adjusted to the thickness of the tile lath.

In a further embodiment of the tile hook according to the invention both the second mounting part and the second end part are provided with a mutually engaging toothing for the purpose of locking the second mounting part in a position relative to the second end part.

These and other features of the invention are further elucidated with reference to the accompanying drawings.
Figure 1 shows a perspective view of an embodiment of the tile hook according to the invention.
Figure 2 shows the tile hook according to figure 1 with exploded parts.
Figure 3 shows a side view of the partially wedge-shaped body of the tile hook according to figure 2.

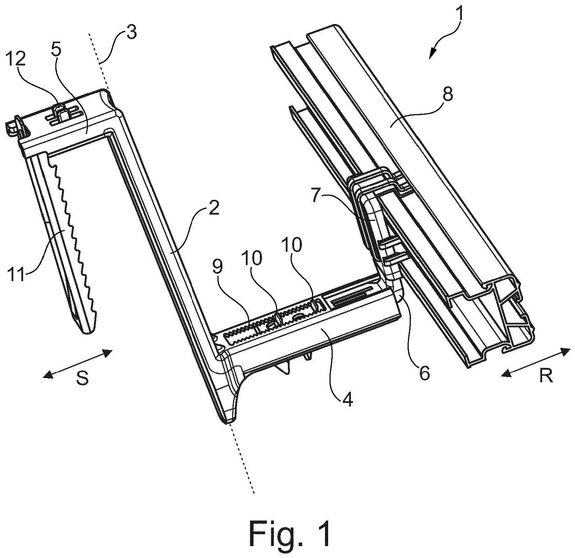

Figure 1 shows a perspective view of a tile hook 1 according to the invention. Tile hook 1 has a Z-shaped body constructed from an elongate base part 2 with a longitudinal axis 3, a first end part 4 and a second end part 5, these each extending at right angles, although in opposite directions, to the longitudinal axis 3.

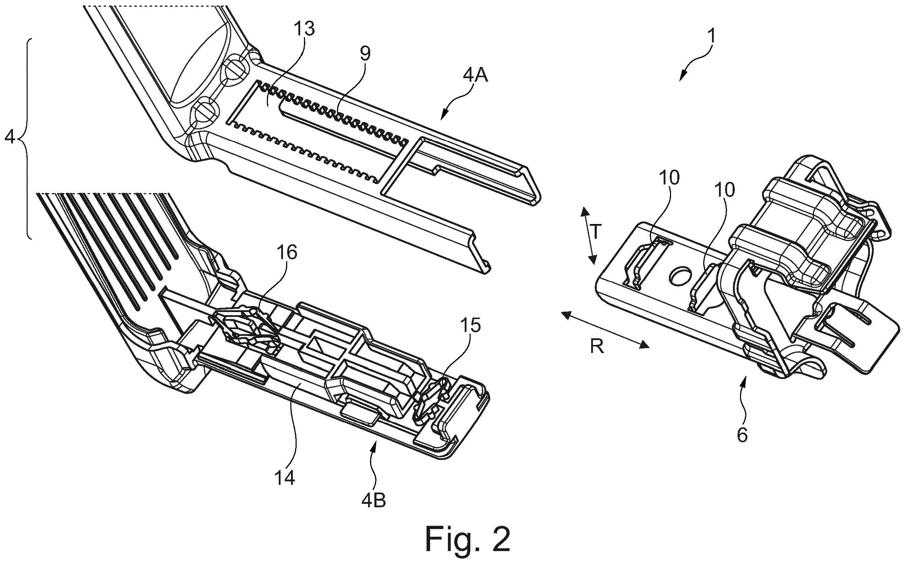

Placed into first end part 4 is a first mounting part 6 on which a clamp 7 with a frame tube 8 is arranged. The first mounting part 6 can be slid in direction R relative to first end part 4. The first mounting part 6 can be fixed in its position relative to first end part 4 by means of toothing 9 and 10 (see also figure 2).

An L-shaped second mounting part 11, which can be adjusted in direction S in order to adjust the tile hook 1 to the thickness of a tile lath, is arranged on second end part 5. Resilient toothing 12 is provided to block second mounting part 11 in the desired position.

Figure 2 shows tile hook 1 partially, with exploded parts. The first end part 4 is formed from a metal shell part 4A and a plastic shell part 4B.

A slot 13 is provided in metal shell part 4A in the upper side, wherein a toothing 9 is arranged on the longitudinal edges. This toothing 9 co-acts with the two upright teeth 10, which are arranged on mounting part 6. For this purpose the part with the upright teeth 10 is placed into first end part 4 in direction R and moved upward in direction T at the correct position in order to slide teeth 10 in toothing 9 and thereby lock the position.

A partially wedge-shaped body 14, which is likewise slidable in direction R, is arranged on the plastic shell part 4B. Provided on either side of the partially wedge-shaped body 14 are resilient means 15, 16, which urge body 14 into the release position.

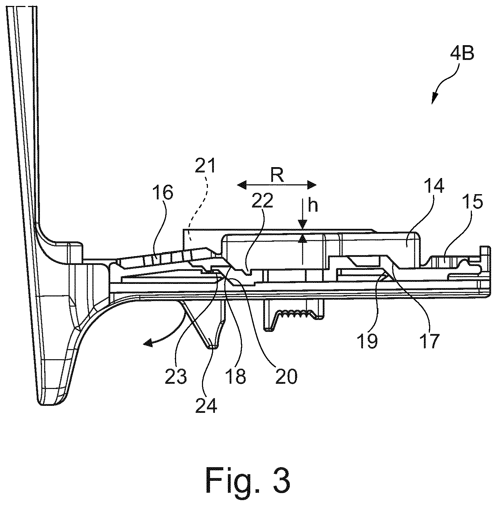

Figure 3 shows a side view of shell part 4B and the partially wedge-shaped body 14 arranged thereon. Body 14 is provided on the underside with two rising surfaces 17, 18 which co-act with the respective rising surfaces 19, 20. When body 14 is pressed to position 21 in direction R, the respective rising surfaces 17, 18, 19, 20 will lie against each other and will have moved the body 14 upward over a height h. This ensures that the upright teeth 10 are slid into the toothing 9 and held there.

Further also provided on the underside of the partially wedge-shaped body 14 is a first locking protrusion 22 which co-acts with the second locking protrusion 23 at the end of rising surface 20. The partially wedge-shaped body 14 is hereby held in the locking position and cannot be slid back to the release position by resilient means 15, 16.

Because the second locking protrusion 23 is arranged for resilient tilting, the engagement of the two locking protrusions 22, 23 can be broken by pressing against projection 24.

## Claims

1. Tile hook (1) for mounting a frame for for instance solar panels on a tile roof, which tile hook (1) comprises:
- a Z-shaped body having an elongate base part, a first end part (4) extending from a first end of the elongate base part (2) substantially perpendicularly of the longitudinal axis (3) of the base part, and a second end part(5) extending from a second end (5) of the elongate base part (2) substantially perpendicularly of the longitudinal axis of the base part (2) and in opposite direction to the direction of the first end part(4);
- a first mounting part (6) for mounting on a frame for for instance solar panels, which first mounting part (6) is slidable perpendicularly of the longitudinal axis of the base part (2) and is arranged on the first end part(4);
wherein the first mounting part (6) comprises a first toothing (10) and wherein the first end part comprises a second toothing (9);
wherein the first mounting part (6) is displaceable in a direction parallel to the longitudinal axis of the base part (2) between a first position in which the first toothing (10) and the second toothing (9) engage in each other and a second position in which the first toothing (10) and the second toothing (9) are out of engagement with each other,
- locking means for holding the first mounting part in the first position
**characterized in that**
the locking means comprise a partially wedge-shaped body (14) which is slidable perpendicularly of the longitudinal axis of the base part (2) between a release position and a locking position, wherein in the locking position the partially wedge-shaped body (14) holds the mounting part (6) in the first position and in the release position the first mounting part (6) is freely displaceable between the first and second position.

2. Tile hook (1) according to claim 1, **characterized in that** one of the first end (4) and the first mounting part (6) partially encloses the other, and wherein the partially wedge-shaped body (14) is positioned between the enclosing part and the enclosed part in the locking position.

3. Tile hook (1) according to claim 2, **characterized in that** the enclosing part is composed of at least two shell parts (4A, 4B) which are arranged on each other and which form a tubular part into which the enclosed part protrudes.

4. Tile hook (1) according to claim 3, wherein the enclosing part is the first end (4) and wherein one of the at least two shell parts (4A, 4B) is a plastic shell part (4B) which extends up to the second end along the Z-shaped body.

5. Tile hook (1) according to any one of the foregoing claims, further comprising resilient means (15,16) for urging the partially wedge-shaped body (14) to the release position;
a resilient first locking protrusion (22) which is displaceable transversely of the sliding direction of the partially wedge-shaped body (14); and
a second locking protrusion (23) arranged on the partially wedge-shaped body (14), which first locking protrusion (22) and second locking protrusion (23) can engage in each other in order to lock the partially wedge-shaped body (14) in the locking position.

6. Tile hook (1) according to any one of the foregoing claims, further comprising a second mounting part (11) for mounting on a roof, which second mounting part (11) is L-shaped and is slidable perpendicularly of the longitudinal axis of the base part (2) and arranged on the second end part with one leg of the L-shape, and wherein the other leg of the L-shape extends parallel to the longitudinal axis of the base part (2).

7. Tile hook (1) according to claim 6, wherein both the second mounting part (11) and the second end part (5) are provided with a mutually engaging toothing (12) for the purpose of locking the second mounting part (11) in a position relative to the second end part (5).

## Patentansprüche

1. Ziegelhaken (1) zum Montieren eines Rahmens für beispielsweise Sonnenkollektoren auf einem Ziegeldach, wobei der Ziegelhaken (1) Folgendes umfasst:
- einen Z-förmigen Körper, der ein längliches Basisteil, ein erstes Endteil (4), das sich von einem ersten Ende des länglichen Basisteils (2) im Wesentlichen senkrecht zu der Längsachse (3) des Basisteils erstreckt, und ein zweites Endteil (5), das sich von einem zweiten Ende (5) des länglichen Basisteils (2) im Wesentlichen senkrecht zu der Längsachse des Basisteils (2) und in entgegengesetzter Richtung zu der Richtung des ersten Endteils (4) erstreckt, aufweist;
- ein erstes Montageteil (6) zum Montieren an einem Rahmen für beispielsweise Solarpanels, wobei das erste Montageteil (6) senkrecht zu der Längsachse des Basisteils (2) verschiebbar ist und an dem ersten Endteil (4) eingerichtet ist;
wobei das erste Montageteil (6) eine erste Verzahnung (10) umfasst und wobei das erste Endteil eine zweite Verzahnung (9) umfasst;
wobei das erste Montageteil (6) in einer Richtung parallel zu der Längsachse des Basisteils (2) zwischen einer ersten Position, in der die erste Verzahnung (10) und die zweite Verzahnung (9) ineinandergreifen, und einer zweiten Position, in der die erste Verzahnung (10) und die zweite Verzahnung (9) außer Eingriff miteinander sind, umziehbar ist,
- Verriegelungsmittel zum Halten des ersten Montageteils in der ersten Position,
**dadurch gekennzeichnet, dass**
die Verriegelungsmittel einen teilweiser keilförmigen Körper (14) umfassen, der senkrecht zu der Längsachse des Basisteils (2) zwischen einer Freigabeposition und einer Verriegelungsposition verschiebbar ist, wobei der teilweise keilförmige Körper (14) in der Verriegelungsposition das Montageteil (6) in der ersten Position hält und in der Freigabeposition das erste Montageteil (6) zwischen der ersten und zweiten Position frei verschiebbar ist.

2. Ziegelhaken (1) nach Anspruch 1, **dadurch gekennzeichnet, dass** eines des ersten Endes (4) und des ersten Montageteils (6) das andere teilweise umschließt, und wobei der teilweise keilförmige Körper (14) in der Verriegelungsposition zwischen dem umschließenden Teil und dem umschlossenen Teil positioniert ist.

3. Ziegelhaken (1) nach Anspruch 2, **dadurch gekennzeichnet, dass** das Umschließungsteil aus mindestens zwei aufeinander eingerichteten Schalenteilen (4A, 4B) zusammengesetzt ist, die ein rohrförmiges Teil bilden, in das das umschlossene Teil hineinragt.

4. Ziegelhaken (1) nach Anspruch 3, wobei das umschließende Teil das erste Ende (4) ist, und wobei eines der mindestens zwei Schalenteile (4A, 4B) ein Kunststoffschalenteil (4B) ist, das sich entlang des Z-förmigen Körpers bis zu dem zweiten Ende erstreckt.

5. Ziegelhaken (1) nach einem der vorstehenden Ansprüche, der ferner elastische Mittel (15, 16) zum Drücken des teilweise keilförmigen Körpers (14) in die Freigabeposition umfasst;
einen elastischen ersten Verriegelungsvorsprung (22), der quer zu der Verschieberichtung des teilweise keilförmigen Körpers (14) verschiebbar ist; und
einen zweiten Verriegelungsvorsprung (23), der an dem teilweise keilförmigen Körper (14) eingerichtet ist, wobei der erste Verriegelungsvorsprung (22) und der zweite Verriegelungsvorsprung (23) ineinander eingreifen können, um den teilweise keilförmigen Körper (14) in der Verriegelungsposition zu verriegeln.

6. Ziegelhaken (1) nach einem der vorstehenden Ansprüche, der ferner ein zweites Montageteil (11) zum Montieren auf einem Dach umfasst, wobei das zweite Montageteil (11) L-förmig ist und senkrecht zu der Längsachse des Basisteils (2) verschiebbar und an dem zweiten Endteil mit einem Schenkel der L-Form eingerichtet ist, und wobei sich der andere Schenkel der L-Form parallel zu der Längsachse des Basisteils (2) erstreckt.

7. Ziegelhaken (1) nach Anspruch 6, wobei sowohl das zweite Montageteil (11) als auch das zweite Endteil (5) mit einer ineinandergreifenden Verzahnung (12) versehen sind, um das zweite Montageteil (11) in einer Position relativ zu dem zweiten Endteil (5) zu verriegeln.

## Revendications

1. Crochet de toiture (1) pour le montage d'un cadre, par exemple des panneaux solaires sur un toit en tuile, lequel crochet de toiture (1) comprend :
- un corps en forme de Z ayant une partie de base allongée, une première partie d'extrémité (4) s'étendant à partir d'une première extrémité de la partie de base allongée (2) sensiblement perpendiculairement à l'axe longitudinal (3) de la partie de base, et une seconde partie d'extrémité (5) s'étendant à partir d'une seconde extrémité (5) de la partie de base allongée (2) sensiblement perpendiculairement à l'axe longitudinal de la partie de base (2) et dans une direction opposée à la direction de la première partie d'extrémité (4) ;
- une première partie de montage (6) pour le montage sur un cadre, par exemple des panneaux solaires, laquelle première partie de montage (6) peut coulisser perpendiculairement à l'axe longitudinal de la partie de base (2) et est disposée sur la première partie d'extrémité (4) ;
dans lequel la première partie de montage (6) comprend une première denture (10) et dans lequel la première partie d'extrémité comprend une seconde denture (9) ; dans lequel la première partie de montage (6) peut être déplacée dans une direction parallèle à l'axe longitudinal de la partie de base (2) entre une première position dans laquelle la première denture (10) et la seconde denture (9) s'engagent l'une dans l'autre et une seconde position dans laquelle la première denture (10) et la seconde denture (9) sont désengagées l'une de l'autre,
- des moyens de verrouillage pour maintenir la première pièce de montage dans la première position
**caractérisé en ce que**
les moyens de verrouillage comprennent un corps partiellement en forme de coin (14) qui peut coulisser perpendiculairement à l'axe longitudinal de la partie de base (2) entre une position de libération et une position de verrouillage, dans lequel, dans la position de verrouillage, le corps partiellement en forme de coin (14) maintient la partie de montage (6) dans la première position et, dans la position de libération, la première partie de montage (6) peut se déplacer librement entre la première et la seconde position.

2. Crochet de toiture (1) selon la revendication 1, **caractérisé en ce que** l'une de la première extrémité (4) et de la première partie de montage (6) enveloppe partiellement l'autre, et dans lequel le corps partiellement en forme de coin (14) est positionné entre la partie d'enveloppe et la partie d'enveloppe dans la position de verrouillage.

3. Crochet de toiture (1) selon la revendication 2, **caractérisé en ce que** la partie d'enveloppe est composée d'au moins deux parties de coque (4A, 4B) qui sont disposées l'une sur l'autre et qui forment une partie tubulaire dans laquelle la partie d'enveloppe fait saillie.

4. Crochet de toiture (1) selon la revendication 3, dans lequel la partie d'enveloppe est la première extrémité (4) et dans lequel l'une des au moins deux parties de coque (4A, 4B) est une partie de coque en plastique (4B) qui s'étend jusqu'à la seconde extrémité le long du corps en forme de Z.

5. Crochet de toiture (1) selon l'une quelconque des revendications précédentes, comprenant en outre des moyens élastiques (15, 16) pour pousser le corps partiellement en forme de coin (14) vers la position de libération ;
une première saillie de verrouillage élastique (22) qui est déplaçable transversalement à la direction de coulissement du corps partiellement en forme de coin (14) ; et
une seconde saillie de verrouillage (23) disposée sur le corps partiellement en forme de coin (14), laquelle première saillie de verrouillage (22) et seconde saillie de verrouillage (23) peuvent s'engager l'une dans l'autre afin de verrouiller le corps partiellement en forme de coin (14) dans la position de verrouillage.

6. Crochet de toiture (1) selon l'une quelconque des revendications précédentes, comprenant en outre une seconde partie de montage (11) pour le montage sur un toit, laquelle seconde partie de montage (11) est en forme de L et peut coulisser perpendiculairement à l'axe longitudinal de la partie de base (2) et disposée sur la seconde partie d'extrémité avec une jambe de la forme en L, et dans lequel l'autre jambe de la forme en L s'étend parallèlement à l'axe longitudinal de la partie de base (2).

7. Crochet de toiture (1) selon la revendication 6, dans lequel la seconde partie de montage (11) et la seconde partie d'extrémité (5) sont pourvues d'une denture s'engageant mutuellement (12) dans le but de verrouiller la seconde partie de montage (11) dans une position par rapport à la seconde partie d'extrémité (5).
